# EUROPÄISCHE PATENTSCHRIFT

(11) **EP 3 203 005 B1**
(45) Veröffentlichungstag und Bekanntmachung des Hinweises auf die Patenterteilung: **07.08.2019**
(21) Anmeldenummer: 17154183.2
(22) Anmeldetag: 01.02.2017
(51) Int. Cl.: E05F 15/622

(54) **ROHRFÖRMIGE ANTRIEBSEINRICHTUNG**
TUBULAR DRIVE DEVICE
DISPOSITIF D'ENTRAÎNEMENT TUBULAIRE

(30) Priorität: 05.02.2016 DE 102016201772
(43) Veröffentlichungstag der Anmeldung: 09.08.2017
(73) Patentinhaber: Stabilus GmbH, 56070 Koblenz (DE)
(72) Erfinder: Link, Markus, 56075 Koblenz (DE); Sabet, Dave, 53173 Bonn (DE); Knopp, Michael, Royal Oak, MI, 48067 (US)
(74) Vertreter: Weickmann & Weickmann PartmbB

(56) Entgegenhaltungen:
- EP-A2- 0 854 262
- DE-A1-102006 030 986
- DE-A1-102008 030 247
- DE-U1-202011 109 760

## Beschreibung

Die vorliegende Erfindung betrifft eine rohrförmige Antriebseinrichtung für eine Klappe eines Fahrzeugs, vorzugsweise eine Heckklappe oder Tür, mit zwei teleskopisch ineinander gesteckten Rohren, deren freie Enden jeweils an der Klappe des Fahrzeugs und an dem Fahrzeug selbst angelenkt sind, wobei die Rohre mittels einer von einem Elektromotor angetriebenen Spindel mit einer darauf angeordneten Spindelmutter auseinander- und zusammengefahren werden können, um so die Klappe zu öffnen und zu schließen. Dabei sind Elektromotor, Spindel und Spindelmutter sowie eine Elektronikplatine mit Sensor-elementen innerhalb der rohrförmigen Antriebseinrichtung angeordnet.

Solche rohrförmigen Antriebseinrichtungen werden an Stelle der üblichen Gasfedern beispielsweise an einer Heckklappe eines Kraftfahrzeugs angebracht, um die Heckklappe automatisch bzw. per Fernbedienung öffnen und schließen zu können. Von entscheidender Bedeutung ist es dabei, dass die Baugröße dieser Antriebseinrichtungen nicht wesentlich größer werden darf, als die Baugröße der üblicherweise verwendeten Gasfedern. Trotzdem muss die Antriebseinrichtung einen relativ langen Arbeitsbereich überdecken, ohne selbst länger als die üblichen Gasfedern zu werden.

Bisher erfolgte die Ansteuerung solcher Antriebseinrichtungen üblicherweise durch eine separate Leistungselektronik in einem eigenen Gehäuse, die die Fahrgeschwindigkeit des Elektromotors der Antriebseinrichtung über Pulsweitenmodulation geregelt hat. In der Antriebseinrichtung selbst befand sich nur eine kleine Sensorplatine, die, meist mittels Hallsensoren, Bewegungsrichtung und Bewegungsgeschwindigkeit der Klappe erfasst hat. Die Leistungselektronik zur Steuerung des Antriebsmotors musste irgendwo im Fahrzeug untergebracht werden. Dies führte dazu, dass noch an anderer Stelle im Fahrzeug Platz verbraucht wurde, ein zusätzliches Bauteil verbaut werden musste, und der PWM-gepulste Betriebsstrom über längere Leitungen übertragen werden musste. Insbesondere Letzteres führte regelmäßig zu erheblichen Problemen mit der elektro-magnetischen Verträglichkeit. Die Verbindungsleitungen zwischen der Leistungselektronik und der Antriebseinrichtung führten durch die 20 kHz-Pulsweitenmodulationsfrequenz zu erheblichen Störabstrahlungen. Des weiteren führten die nicht unerheblichen Leitungs-längen und die zusätzlich erforderlichen Steckverbinder darüber hinaus zu einem erheblichen Spannungsabfall über den Gesamtwiderstand der Leitung und der diversen nach dem Stand der Technik erforderlichen Steckverbinder. Heute beträgt der Gesamtwiderstand bei den Antriebseinrichtungen gemäß dem Stand der Technik etwa 250 mΩ. Dies bedeutet bei einem Motorstrom von 10 A 2,5 V Spannungsverlust, was bei einem 12 V-Netz bereits zu erheblichen Problemen führen kann.

Diese Problematik wurde bereits bei dem nächstgelegenen Stand der Technik, der DE 10 2008 030 247 A1 des gleichen Anmelders erkannt. Hier hat man dann versucht, die sonst in einem separaten Gehäuse als eigenes Gerät vorgesehene Leistungselektronik sowie einen elektrischen Energiespeicher direkt in die Antriebseinrichtung einzubauen. Dadurch hat sich dann aber die Baulänge der Antriebseinrichtung in unzulässiger Weise vergrößert, so dass diese Lösung nicht umsetzbar war, da die Antriebsvorrichtung gemäß diesem Stand der Technik nicht mehr in den ursprünglich für die Gasfeder vorgesehen Bauraum passte.

Ferner sei an dieser Stelle auf die Dokumente EP 0 854 262 A2, die die Merkmale des Oberbegriffs des Anspruchs 1 offenbart, DE 20 2011 109760 U1 und DE 10 2006 030986 A1 hingewiesen.

Ausgehend von diesem Stand der Technik ist es daher Aufgabe der vorliegenden Erfindung, eine rohrförmige Antriebseinrichtung zu schaffen, die problemlos anstelle der Gasfedern beispielsweise in der Heckklappe eines Kraftfahrzeugs verbaut werden kann, und die trotzdem keine Störabstrahlungen (EMV) verursacht und auch den Spannungsabfall über die Anschlussleitungen, insbesondere beim Beginn des Öffnens der Klappe gering hält.

Erfindungsgemäß ist es erstmals gelungen, die Leistungselektronik für die Ansteuerung des Elektromotors so weit zu miniaturisieren, dass diese auf der auch bei den Antriebseinrichtungen des Standes der Technik vorhandenen Sensorplatine zusätzlich Platz findet, so dass kein weiterer Bauraum für die Leistungselektronik vorgesehen werden muss, wodurch die Baugröße der Antriebseinrichtung unzulässig wachsen würde.

Es ist dabei besonders bevorzugt, die Elektronikplatine zwischen dem Elektromotor und dem freien Ende des den Elektromotor tragenden Rohres direkt am Elektromotor anzuordnen. Auf diese Weise werden die PWM-Frequenz beaufschlagten Leitungswege besonders kurz, ebenso wird der Spannungsabfall zwischen der Elektronik und dem Motor minimiert.

Erfindungsgemäß weist die Elektronikplatine die Form einer Scheibe auf und ist senkrecht zur Symmetrieachse der Rohre angeordnet. Auf diese Weise benötigt die gesamte Elektronik nur den geringstmöglichen Bauraum.

Weiter ist es besonders bevorzugt, wenn die Elektronikplatine dann einen Temperatursensor umfasst. Da die Platine so nahe an dem Motor angeordnet werden kann, kann durch einfache Temperaturmessung auf der Platine erkannt werden, wenn der Motor sich überhitzen sollte. Es können dann entsprechende Schutzmaßnahmen über die Steuer-software der Leistungselektronik getroffen werden, beispielsweise Verringerung des Ansteuerungsstromes oder Abschaltung des Motors. Im Folgenden wird die vorliegende Erfindung anhand des in den Zeichnungen dargestellten Ausführungsbeispiels näher erläutert. Es zeigt:
Figur 1 eine dreidimensionale Darstellung einer Ausführungsform einer erfindungsgemäßen Antriebsvorrichtung mit als Detail herausvergrößerter Elektronikplatine; und
Figur 2 eine Schnittdarstellung durch die Antriebsvorrichtung der Figur 1.

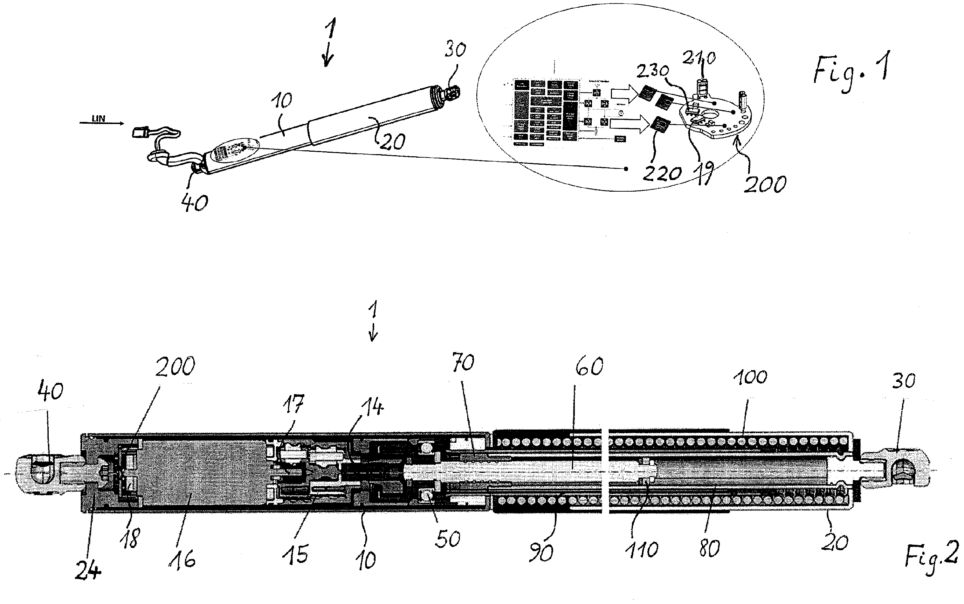

Figur 1 zeigt eine dreidimensionale Darstellung einer Ausführungsform der erfindungsgemäßen Antriebsvorrichtung 1, die die Abmaße und im wesentlichen auch das Aussehen einer klassischen Gasfeder zum Abstützen einer Heckklappe aufweist. Die dargestellte Antriebseinrichtung 1 besitzt ein Gehäuserohr 10, an dem ein Überrohr 20 teleskopisch verschiebbar geführt ist.
An den beiden freien Enden der ineinandergesteckten Rohre 10 und 20 sind jeweils Kugelpfannen 30, 40 angeordnet, mittels derer die Antriebseinrichtung beispielsweise mit der Heckklappe und der Karosserie eines Kraftfahrzeuges in gleicher Weise verbindbar ist, wie dies bisher mit Gasfedern geschieht.

Der detailliertere Aufbau der Antriebseinrichtung ergibt sich aus der Figur 2. In einem dem Überrohr 20 zugewandten Endbereich des Gehäuserohres 10 ist ein Lager 50 fest eingebaut, an dem ein Ende einer koaxial in das Überrohr 20 ragenden Gewindespindel 60 drehbar gelagert ist. Auf der Gewindespindel 60 ist eine Spindelmutter 70 gegenüber dem Gehäuserohr 10 drehfest angeordnet.

Die Spindelmutter 70 ist mit einem Ende eines die Gewindespindel 60 koaxial umschließenden Spindelrohrs 80 verbunden, an dessen anderem Ende die eine Kugelpfanne 30 fest angeordnet ist.
Die Spindelmutter 70 ist in einem das Spindelrohr 80 umschließenden Führungsrohr 90 axial verschiebbar geführt, das mit dem Gehäuserohr 10 fest verbunden ist. In dem Ringspalt zwischen dem Führungsrohr 90 und dem dieses mit radialem Abstand koaxial umschließenden Überrohr 20 ist eine Schraubendruckfeder 10 angeordnet, die mit ihrem einen Ende an dem Überrohr 2 im Bereich der einen Kugelpfanne 30 und mit ihrem anderen Ende an dem Gehäuserohr 10 axial abgestützt ist. Die Gewindespindel 60 trägt an ihrem der einen Kugelpfanne 30 zugewandten Ende eine Führungshülse 110, mit deren zylindrischer Mantelfläche die Gewindespindel 60 in dem Spindelrohr 80 axial verschiebbar geführt ist. Das Führungsrohr 90 besitzt axiale Schlitze, die sich weitgehend über dessen Länge erstrecken. Entsprechend der axialen Schlitze sind an der Spindelmutter 70 radial hervor-stehende Abstützzapfen angeordnet, die in die axialen Schlitze radial hineinragen und für eine Verdrehsicherung der Spindelmutter 70 gegenüber dem Führungsrohr 90 sorgen,

Die Gewindespindel 60 ist über das Lager 50 axial abgestützt.

Eine Abtriebswelle 14 eines Getriebes 15 ist koaxial drehfest mit der Gewindespindel 60 verbunden, wobei das Getriebe 15 über eine weitere Abtriebswelle 17 eines Elektromotors 16 drehbar antreibbar ist.

Die weitere Abtriebswelle 17 ragt auch auf der dem Getriebe 15 abgewandten Seite aus dem Elektromotor 16 heraus und trägt auf ihrem freien Ende einen Dauermagnet 18, der axial einer Hallelemente 19 aufweisenden, feststehend angeordneten Elektronikplatine 200 gegenüberliegt. Die zweite Kugelpfanne 40 ist mittels eines Verschlussdeckels 24 mit dem Gehäuserohr 10 verbunden.
Wie in der Detaildarstellung von Figur 1 gezeigt, trägt die im wesentlichen scheibenförmige Elektronikplatine 200, die wie in Figur 2 dargestellt in der Antriebseinrichtung 1 in senkrechter Lage zu der Rotationsachse der Rohre 10 und 20 angeordnet ist, nicht nur die Hallelemente 19, sondern auch die Leistungsschalter 210 sowie die zur Ansteuerung dieser Leistungsschalter 210 erforderlichen elektronischen Schaltkreise 220, in denen auch die Computerprogramme zur Steuerung der Leistungsschalter gespeichert sind.

Auf diese Weise erreicht die vorliegende Erfindung bei gleicher Baulänge wie die ursprünglichen Antriebseinrichtungen eine optimale Abschirmung gegen die Störfrequenzen der Pulsweitenmodulation und einen minimalen Spannungsabfall zwischen der Leistungselektronik und dem Elektromotor.

Vorzugsweise kann die Elektronikplatine 200 auch noch einen Temperatursensor 230 umfassen, der durch die erfindungsgemäße Anordnung der Elektronikplatine optimal angeordnet ist, um die Betriebstemperatur des Elektromotors 16 zu überwachen.

## Patentansprüche

1. Rohrförmige Antriebseinrichtung (1) für eine Klappe eines Fahrzeugs, vorzugsweise einen Heckdeckel, eine Heckklappe oder Tür,
mit zwei teleskopisch ineinander gesteckten Rohren (10, 20), deren freie Enden (30, 40) jeweils an der Klappe des Fahrzeugs und an dem Fahrzeug selbst anlenkbar sind,
wobei die Rohre (10, 20) mittels einer von einem Elektromotor (16) angetriebenen Spindel (60) mit einer darauf angeordneten Spindelmutter (70) auseinander- und zusammengefahren werden können, um so die Klappe zu öffnen und zu schließen,
wobei Elektromotor (16), Spindel (60) und Spindelmutter (70) sowie eine Elektronikplatine (200) mit Sensorelementen (19, 230) innerhalb der rohrförmigen Antriebseinrichtung (1) angeordnet sind,
wobei die Elektronikplatine (200) die Form einer Scheibe aufweist und senkrecht zur Symmetrieachse der Rohre (10, 20) angeordnet ist, und
wobei auf derselben Elektronikplatine (200) zusätzlich auch eine Leistungselektronik (210) für die Ansteuerung des Elektromotors (16) angeordnet ist,
**dadurch gekennzeichnet, dass** die Elektronikplatine (200) Hallelemente, Leistungsschalter und zur Ansteuerung dieser Leistungsschalter erforderliche elektronische Schaltkreise, in welchen Computerprogramme zur Steuerung der Leistungsschalter gespeichert sind, umfasst.

2. Antriebseinrichtung nach Anspruch 1, **dadurch gekennzeichnet, dass** die Elektronikplatine (200) zwischen dem Elektromotor (16) und dem freien Ende (40) des den Elektromotor (16) tragenden Rohres (10) am Elektromotor (16) angeordnet ist.

3. Antriebseinrichtung nach Anspruch 2, **dadurch gekennzeichnet, dass** die Elektronikplatine (200) auch einen Temperatursensor (230) umfasst.

4. Antriebseinrichtung nach einem der vorhergehenden Ansprüche, **dadurch gekennzeichnet, dass** das Gehäuserohr (10) aus einem Werkstoff hoher elektrischer Leitfähigkeit ausgebildet ist.

5. Antriebseinrichtung nach Anspruch 4, **dadurch gekennzeichnet, dass** das Gehäuserohr (10) aus einem weichmagnetischen Werkstoff besteht.

## Claims

1. Tubular drive mechanism (1) for a panel of a vehicle, preferably a luggage compartment lid, a tailgate or door, comprising two tubes (10, 20) which are nested telescopically inside one another, the free ends (30, 40) of which can be hinged to the panel of the vehicle and to the vehicle itself, respectively, it being possible to move the tubes (10, 20) apart and together, so as to open and to close the panel, by means of a spindle (60) which is driven by an electric motor (16) and has a spindle nut (70) arranged on said spindle, the electric motor (16), spindle (60), spindle nut (70) and an electronic circuit board (200) which has sensor elements (19, 230) being arranged inside the tubular drive mechanism (1), the electronic circuit board (200) having the shape of a disc and being arranged perpendicular to the axis of symmetry of the tubes (10, 20), and a power electronic device (210) for controlling the electric motor (16) also being arranged on the same electronic circuit board (200), **characterised in that** the electronic circuit board (200) comprises Hall elements, circuit breakers and electronic circuits which are required for controlling these circuit breakers, in which circuits computer programs for controlling the circuit breakers are stored.

2. Drive mechanism according to claim 1, **characterised in that** the electronic circuit board (200) is arranged on the electric motor (16) between the electric motor (16) and the free end (40) of the tube (10) which supports the electric motor (16).

3. Drive mechanism according to claim 2, **characterised in that** the electronic circuit board (200) also includes a temperature sensor (230).

4. Drive mechanism according to any of the preceding claims, **characterised in that** the housing tube (10) is formed of a material which has high electrical conductivity.

5. Drive mechanism according to claim 4, **characterised in that** the housing tube (10) consists of a magnetically soft material.

## Revendications

1. Dispositif d'entraînement tubulaire (1) pour un capot d'un véhicule, de préférence un couvercle arrière, un hayon ou une porte,
avec deux tubes (10, 20) emboîtés télescopiquement l'un dans l'autre, dont les extrémités libres (30, 40) peuvent être articulées respectivement sur le capot du véhicule et sur le véhicule proprement dit,
dans lequel les tubes (10, 20) peuvent être sortis l'un de l'autre et rentrés l'un dans l'autre au moyen d'une broche (60) entraînée par un moteur électrique (16) avec un écrou de broche (70) agencé sur celle-ci, pour ainsi ouvrir et fermer le capot,
dans lequel le moteur électrique (16), la broche (60) et l'écrou de broche (70) ainsi qu'une carte électronique (200) avec des éléments capteurs (19, 230) sont agencés à l'intérieur du dispositif d'entraînement tubulaire (1),
dans lequel la carte électronique (200) présente la forme d'un disque et est agencée perpendiculairement à l'axe de symétrie des tubes (10, 20), et
dans lequel une électronique de puissance (210) pour la commande du moteur électrique (16) est agencée en plus aussi sur la même carte électronique (200), **caractérisé en ce que** la carte électronique (200) comprend des éléments à effet Hall, des commutateurs de puissance et des circuits électroniques nécessaires à la commande de ces commutateurs de puissance, dans lesquels des programmes informatiques sont enregistrés pour la commande des commutateurs de puissance.

2. Dispositif d'entraînement selon la revendication 1, **caractérisé en ce que** la carte électronique (200) est agencée entre le moteur électrique (16) et l'extrémité libre (40) du tube (10) portant le moteur électrique (16) au niveau du moteur électrique (16).

3. Dispositif d'entraînement selon la revendication 2, **caractérisé en ce que** la carte électronique (200) comprend aussi un capteur de température (230).

4. Dispositif d'entraînement selon l'une quelconque des revendications précédentes, **caractérisé en ce que** le tube de boîtier (10) est réalisé en un matériau à grande conductivité électrique.

5. Dispositif d'entraînement selon la revendication 4, **caractérisé en ce que** le tube de boîtier (10) se compose d'un matériau magnétique doux.
